# EUROPÄISCHE PATENTSCHRIFT

(11) **EP 0 676 560 B1**
(45) Veröffentlichungstag und Bekanntmachung des Hinweises auf die Patenterteilung: **26.01.2000**
(21) Anmeldenummer: 95105094.7
(22) Anmeldetag: 05.04.1995
(51) Int. Cl.: F16H 1/28

(54) **Wolfrom-Planetengetriebe mit einem angetriebenen Umlaufträger**
Wolfrom-planetary gearing with driven planet carrier
Wolfrom-engrenage planétaire avec porte-satellites entraîné

(30) Priorität: 07.04.1994 DE 4411952
(43) Veröffentlichungstag der Anmeldung: 11.10.1995
(73) Patentinhaber: ORLOWSKI, Bernhard, Dipl.-Ing., 70176 Stuttgart (DE)
(72) Erfinder: ORLOWSKI, Bernhard, Dipl.-Ing., 70176 Stuttgart (DE)
(74) Vertreter: Patentanwalts-Partnerschaft Rotermund + Pfusch

(56) Entgegenhaltungen:
- EP-A- 0 388 207
- FR-A- 1 578 083
- GB-A- 2 024 984

## Beschreibung

Die Erfindung betrifft ein Wolfrom-Planetengetriebe mit Planetenrädern in einem angetriebenen Umlaufträger.

Für ein solches Getriebe soll ein neuer anwendungsfreundlicher Aufbau erschaffen werden. Dabei wird insbesondere ein kompakter Aufbau zur Erzielung geringer Baugrößen angestrebt. Darüber hinaus soll das Getriebe in Richtung seiner Antriebsachse durchgehend hohl ausbildbar sein.

Zu diesem Zweck ist das gattungsgemäße Planetengetriebe erfindungsgemäß durch die Merkmalskombination nach Anspruch 1 gekennzeichnet.

Zweckmäßige Ausgestaltungen sind Gegenstand der Unteransprüche.

Die Ausführung nach Anspruch 2 ist insbesondere für einen Anwendungsfall geeignet, bei der beispielsweise elektrische Kabel durch den inneren Hohlzylinder des Getriebes verlegt oder andere Teile durch diesen Hohlraum geführt werden sollen.

In der älteren, nicht vorveröffentlichten Patentanmeldung EP 0 674 122 A2 ist unter anderem ein Getriebe mit sämtlichen Merkmalen des Patentanspruches 1 beschrieben. Bei der vorliegenden Erfindung kommt dem Merkmal jedoch eine ältere Priorität zu, weshalb der Inhalt jenes Dokumentes insoweit keinen Stand der Technik nach Art. 54, Abs. 3 EPÜ darstellt.

Ausführungsbeispiele der Erfindung sind in der Zeichnung dargestellt.

Es zeigen
- Fig. 1: ein Wolfrom-Getriebe halb in Ansicht, halb im Längsschnitt in einer für einen Anflanschmotor mit in das Getriebegehäuse einführbarem Kegelantriebsritzel geeigneten Ausführung,
- Fig. 2: das Getriebe nach Fig. 1 in einer Ausführung mit eigener Antriebswelle.

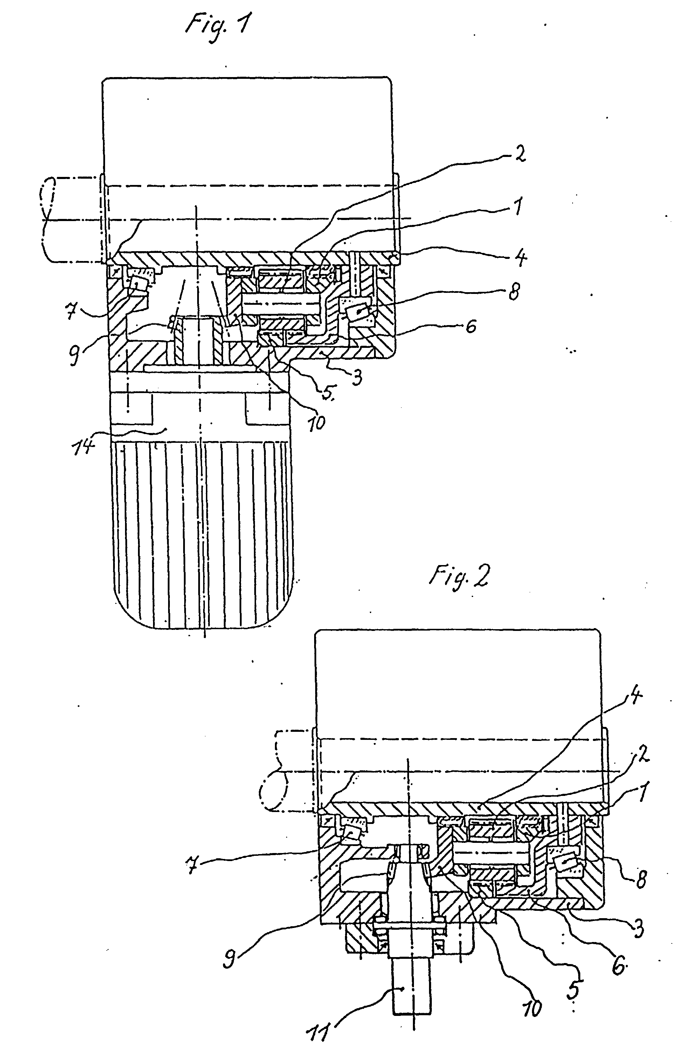

Diese beiden Ausführungen unterscheiden sich lediglich in der Art der Antriebseinbringung. Während die Ausführung nach Fig. 1 das Ansetzen eines in den Getriebeantrieb bewirkenden Anflanschmotor hineinragenden Antriebsritzel ermöglicht, sieht die Ausführung nach Fig. 2 eine vollständig in das Getriebe integrierte eigenständige Antriebswelle zum Anschluß an eine beliebige Antriebsquelle vor.

Ein Umlaufträger 1 mit darin gelagerten Planetenrädern 2 ist auf einer zentralen in Lagern des Getriebegehäuses 3 rotierenden Welle 4 gelagert.

Die Planetenräder 2 kämmen mit einem ersten axialen Bereich in einem innerhalb des Getriebegehäuses 3 feststehenden Hohlrad 5. Mit einem zweiten axialen Bereich kämmen diese Planetenräder 2 in einem drehbaren Hohlrad 6. Die Zähnezahlen der beiden Hohlräder 5 und 6 sind dem Prinzip eines Wolfrom-Getriebes entsprechend geringfügig unterschiedlich, wobei dieser Unterschied der maßgebende Faktor für das Übersetzungsverhältnis des Getriebes ist.

Das drehbare Hohlrad 6 ist fest mit der Welle 4 verbunden. Die Lagerung der fest mit dem drehenden Hohlrad 6 verbundenen Welle 4 erfolgt in den sich in dem Getriebegehäuse 3 abstützenden Wälzlagern 7 und 8. Dabei greift das Wälzlager 7 direkt an der Welle 4 an, während das Wälzlager 8 sich zwischen dem drehbaren Hohlrad 6 und dem Getriebegehäuse 3 befindet.

Der Umlaufträger 1 wird über ein Kegelritzel 9 mit einer senkrecht zu der Achse der Welle 4 verlaufenden Drehachse angetrieben. Zu diesem Zweck ist der Umlaufträger mit einem in das Kegelritzel 9 eingreifenden Zahnkranz 10 fest verbunden.

Bei der Ausführung nach Fig. 1 ist das Kegelritzel 9 Bestandteil eines an das Getriebe anflanschbaren Anflanschmotors 14, der ein Servo-Motor sein kann.

Bei der Ausführung nach Fig. 2 ist das Kegelritzel 9 Bestandteil einer eigenständig in dem Getriebegehäuse 3 gelagerten Antriebswelle 11.

Die Welle 4 kann als Hohl- oder als Vollwelle ausgebildet sein. In den beiden Fig. 1 und 2 ist diese Welle 4 im Schnitt jeweils als Hohlwelle dargestellt und seitlich jeweils strichpunktiert als Vollwelle angedeutet.

Die Einsatzmöglichkeiten für die beschriebenen erfindungsgemäßen Getriebeausführungen sind äußerst mannigfaltig. Von besonderem Vorteil ist dabei jeweils die Möglichkeit, das Getriebegehäuse mit einem hohlen Zentrum in Richtung der Antriebsachse versehen zu können.

Der Erfindung liegt unter anderem insbesondere folgende Überlegung zugrunde.

Bei einem Wolfrom-Getriebe mit einer zentralen Hohlwelle sind die Planetenräder bei kompakten Gehäusen relativ klein. Dadurch bedingt drehen die Planetenräder häufig mit unerwünscht hohen Drehzahlen. Solch hohe Drehzahlen können durch den erfindungsgemäßen Antrieb über ein Kegelritzel überraschend einfach vermieden werden.

## Patentansprüche

1. Wolfrom-Planetengetriebe mit Planetenrädern in einem angetriebenen Umlaufträger, bei dem
(a) die Planetenräder mit einem ersten axialen Bereich in einem innerhalb des Getriebegehäuses feststehenden und mit einem zweiten Bereich in einem drehbaren Hohlrad (5 bzw. 6) kämmen,
(b) die beiden Hohlräder (5, 6) eine geringfügig unterschiedliche Zähnezahl besitzen,
(c) der Umlaufträger (1) durch ein Kegelritzel (9) mit einer etwa senkrecht zur Umlaufträgerachse verlaufenden Drehachse auf der dem drehbaren Hohlrad (6) abgewandten Getriebeseite angetrieben wird,
(d) das drehbare Hohlrad (6) fest mit einer zentralen innerhalb des Getriebegehäuses (3) gelagerten Welle (4) verbunden ist.

2. Wolfrom-Planetengetriebe nach Anspruch 1,
**dadurch gekennzeichnet,**
daß die Welle (4) als Hohlwelle ausgebildet ist.

3. Wolfrom-Planetengetriebe nach Anspruch 1 oder 2,
**dadurch gekennzeichnet,**
daß die Welle (4) sich in Richtung ihrer Achse zumindest über den gesamten Innenraum des Getriebegehäuses (3) erstreckt.

4. Wolfrom-Planetengetriebe nach einem der vorgehenden Ansprüche,
**dadurch gekennzeichnet,**
daß der Umlaufträger (1) auf der zentralen Welle (4) gelagert ist.

## Claims

1. Tungsten epicyclic gearbox with planet wheels in a driven planet carrier, in which
a) the planet wheels mesh, by means of a first axial region, in a fixed internal gearwheel within the gearbox casing and, by means of a second region, in a rotatable internal gearwheel (5 and 6 respectively),
b) the two internal gearwheels (5, 6) have a slightly different number of teeth,
c) the planet carrier (1) is driven by a bevel pinion (9) with an axis of rotation extending approximately at right angles to the planet-carrier axis on the side of the gearbox facing away from the rotatable internal gearwheel (6),
d) the rotatable internal gearwheel (6) is firmly connected to a central shaft (4) supported within the gearbox casing (3).

2. Tungsten epicyclic gearbox according to Claim 1, characterized in that the shaft (4) is configured as a hollow shaft.

3. Tungsten epicyclic gearbox according to Claim 1 or 2, characterized in that the shaft (4) stretches, in the direction of its axis, at least over the complete internal space of the gearbox casing (3).

4. Tungsten epicyclic gearbox according to one of the preceding claims, characterized in that the planet carrier (1) is supported on the central shaft (4).

## Revendications

1. Engrenage planétaire Wolfrom avec roues planétaires dans un porte-satellite entraîné, dans lequel
(a) les roues planétaires s'engrènent avec une première zone axiale dans une couronne de train planétaire fixée à l'intérieur de la boîte d'engrenages et avec une deuxième zone dans une couronne de train planétaire rotative (5, respectivement 6),
(b) les deux couronnes de train planétaire (5, 6) possèdent un nombre de dents légèrement différent,
(c) le porte-satellite (1) est entraîné par un pignon conique (9) avec un axe de rotation s'étendant approximativement perpendiculairement à l'axe du porte-satellite sur le côté de l'engrenage éloigné de la couronne de train planétaire rotative (6),
(d) la couronne de train planétaire rotative (6) est reliée fixement à un arbre central (4) monté à l'intérieur de la boîte d'engrenages (3).

2. Engrenage planétaire Wolfrom selon la revendication 1, caractérisé en ce que l'arbre (4) est conçu en tant qu'arbre creux.

3. Engrenage planétaire Wolfrom selon la revendication 1 ou 2, caractérisé en ce que l'arbre (4) s'étend dans la direction de son axe au moins sur tout l'espace interne de la boîte d'engrenages (3).

4. Engrenage planétaire Wolfrom selon l'une quelconque des revendications précédentes, caractérisé en ce que le porte-satellite (1) est monté sur l'arbre central (4).
